(19) **Europäisches Patentamt**
**European Patent Office**
**Office européen des brevets**

(11) **EP 3 885 160 B1**

(12) **EUROPEAN PATENT SPECIFICATION**

(45) Date of publication and mention
of the grant of the patent:
**10.07.2024 Bulletin 2024/28**

(21) Application number: **19896118.7**

(22) Date of filing: **12.12.2019**

(51) International Patent Classification (IPC):
**B60C 3/04** *(2006.01)* **B60C 9/00** *(2006.01)*
**B60C 9/08** *(2006.01)* **B60C 9/22** *(2006.01)*
**B60C 9/04** *(2006.01)*

(52) Cooperative Patent Classification (CPC):
**B60C 3/04; B60C 9/08; B60C 9/22;**
B60C 2009/0475; B60C 2009/2238; B60C 2200/06

(86) International application number:
**PCT/JP2019/048647**

(87) International publication number:
**WO 2020/122165 (18.06.2020 Gazette 2020/25)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2018 JP 2018233853**

(43) Date of publication of application:
**29.09.2021 Bulletin 2021/39**

(73) Proprietor: **BRIDGESTONE CORPORATION**
**Chuo-ku**
**Tokyo 104-8340 (JP)**

(72) Inventors:
• **KON Seiji**
**Chuo-ku, Tokyo 104-8340 (JP)**

• **HASHIMOTO Masayuki**
**Chuo-ku, Tokyo 104-8340 (JP)**
• **SUZUKI Kohei**
**Chuo-ku, Tokyo 104-8340 (JP)**

(74) Representative: **Marks & Clerk LLP**
**15 Fetter Lane**
**London EC4A 1BW (GB)**

(56) References cited:
EP-A2- 2 123 480     WO-A1-2009/057781
WO-A1-2016/017556     WO-A1-2016/017556
WO-A1-2018/207617     JP-A- 2002 178 720
JP-A- 2008 126 952     JP-A- 2011 126 444
JP-A- 2017 043 202     JP-A- 2017 197 153
JP-A- 2017 206 209     JP-A- S62 128 804
US-A1- 2018 257 435

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a tire comprising a belt layer formed using a resin-coated cord.

[Background Art]

Conventionally, a pneumatic tire (hereinafter abbreviated as a tire when appropriate) having a belt layer formed by winding a resin-coated cord coated with a resin material along a tire circumferential direction is known (see Patent Literature 1.). Such belt layer can be used instead of the traditional two-layer crossing belt. Attention is also drawn to the disclosures of US2018/257435A1, WO2016/017556A1 and EP2123480A2.
US2018/257435A1 is directed to a tire with an annular carcass and a belt layer disposed outside the carcass. A carcass reinforcing layer comprises cords and having a breaking force per unit width of the carcass reinforcement layer of equal to 667 N/mm.

[Citation List]

[Patent Literature]

[Patent Literature 1] Japanese Unexamined Patent Application Publication No. 2018-65426

[Summary of Invention]

When the tire goes over a sharp bump on the road, the belt layer is pulled by tire width direction.
In the case of the crossing belt layer, the belt cords crossing each other are primarily bear such input. On the other hand, in the case of the belt layer formed by using the resin-coated cord described above, since the resin-coated cord is arranged along the tire circumferential direction, it hardly bear such input. Therefore, the coating resin bears such input.
However, if such input is borne by increasing the rigidity of the coating resin itself or by increasing the thickness of the coating resin, there is a problem that the durability of the belt layer cannot be ensured, such as fatigue due to repeated deformation.
In particular, in recent years, a new small shuttle bus has been proposed with an emphasis on transportation of people and goods within the city. Such a small shuttle bus has a total length of about 5 meters and a total width of about 2 meters, and the total vehicle weight is assumed to exceed 3 tons. The tire mounted on such a small shuttle bus is required to have a high load-carrying capacity.
Accordingly, an object of the present invention is to provide a pneumatic achieving both durability of the belt layer and load-carrying capacity when the tire has a belt layer is formed by winding a resin-coated cord coated with a resin material along a tire circumferential direction.
One aspect of the present invention is a tire as claimed in claim 1.

[Brief Description of Drawings]

FIG. 1 is an overall schematic side view of a vehicle 1 to which a pneumatic tire 10 is mounted.
FIG. 2 is a cross-sectional view of the pneumatic tire 10 and a rim wheel 100.
FIG. 3 is a fragmentary cross-sectional view of the sole pneumatic tire 10.
FIG. 4 is a perspective view of a part of a carcass treat 40 T forming a carcass 40.
FIG. 5 shows a typical tire size positioning based on a combination of a tire shape (tire outer diameter OD & tire width SW) and a rim wheel shape (rim diameter RD and rim width RW).
FIG. 6 is a diagram schematically showing a cross-sectional shape of the carcass cord 40 a.

[Description of Embodiments]

Embodiments will be described below with reference to the drawings. The same functions and configurations are denoted by the same or similar reference numerals, and descriptions thereof are omitted as appropriate.

(1) Schematic configuration of the vehicle to which the pneumatic tire is to be mounted

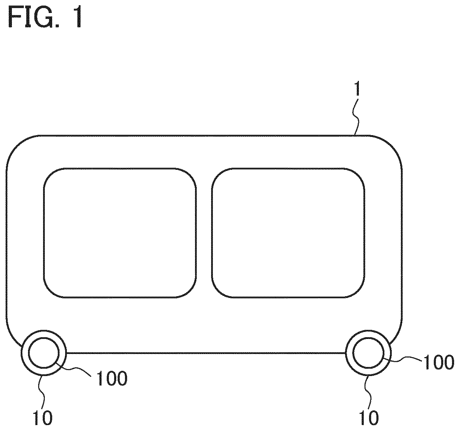

FIG. 1 is an overall schematic side view of the vehicle 1 to which the pneumatic tire 10 according to the present embodiment is mounted. As shown in FIG. 1, in this embodiment, the vehicle 1 is a four-wheel vehicle. The vehicle 1 is not limited to four wheels, but may have a six-wheel configuration or an eight-wheel configuration.

A predetermined number of pneumatic tire 10 are mounted on a vehicle 1 according to a wheel configuration. Specifically, in the vehicle 1, the pneumatic tire 10 assembled to a rim wheel 100 is mounted in a predetermined position.

The vehicle 1 belongs to a new small shuttle bus with an emphasis on transportation of people and goods in the city. In this embodiment, the new small shuttle bus is assumed to be a vehicle having a total length of 4 meters to 7 meters, a total width of about 2 meters, and a total vehicle weight of about 3 tons. However, the size and the gross vehicle weight are not necessarily limited to the range, and may be slightly out of the range.

The small shuttle bus is not necessarily limited to transportation of people, but may be used for transportation of goods, a mobile store, a mobile office, etc.

In addition, small shuttle buses have a relatively low travel speed range (maximum speed: 70 km/h or less, average speed: about 50 km/h) because they are focused on transporting people and goods within the city. Therefore, hydroplaning countermeasures need not be emphasized.

In the present embodiment, it is assumed that the vehicle 1 is an electric vehicle having an automatic driving function (assume Level 4 or higher), but the automatic driving function is not essential and the vehicle 1 may not be an electric vehicle.

If the vehicle 1 is an electric vehicle, an in-wheel motor (unillustrated) is preferably used as a power unit. The in-wheel motor may be provided with the whole unit in the inner space of the rim wheel 100 or a part of the unit in the inner space of the rim wheel 100.

If an in-wheel motor is used, the vehicle 1 preferably has an independent steering function in which each wheel can steer independently. This makes it possible to turn and move in the lateral direction on the spot and eliminates the need for a power transmission mechanism, thereby improving the space efficiency of the vehicle 1.

Thus, in the vehicle 1, high space efficiency is required. For this reason, the pneumatic tire 10 preferably has a small diameter as small as possible.

On the other hand, a high load-carrying capacity (maximum load capacity) is required because it is mounted on the vehicle 1 having a gross vehicle weight corresponding to a vehicle size and an application.

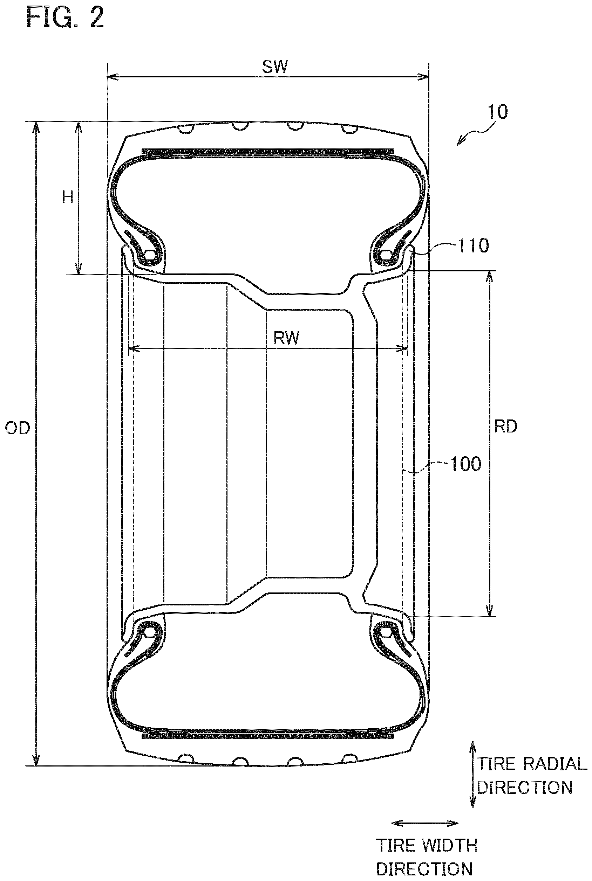

In order to satisfy such requirements, the pneumatic tire 10 has a load-carrying capacity corresponding to the total vehicle weight of the vehicle 1 while reducing the tire outer diameter OD (not shown in FIG. 1, see FIG. 2).

If the vehicle 1 has an in-wheel motor and an independent steering function, the pneumatic tire 10 is preferably low in aspect ratio from the viewpoint of improving responsiveness, and the rim diameter RD (not shown in FIG. 1, see FIG. 2) of the pneumatic tire 10 is preferably large in consideration of a housing space for an in-wheel motor or the like.

(2) Configuration of pneumatic tire

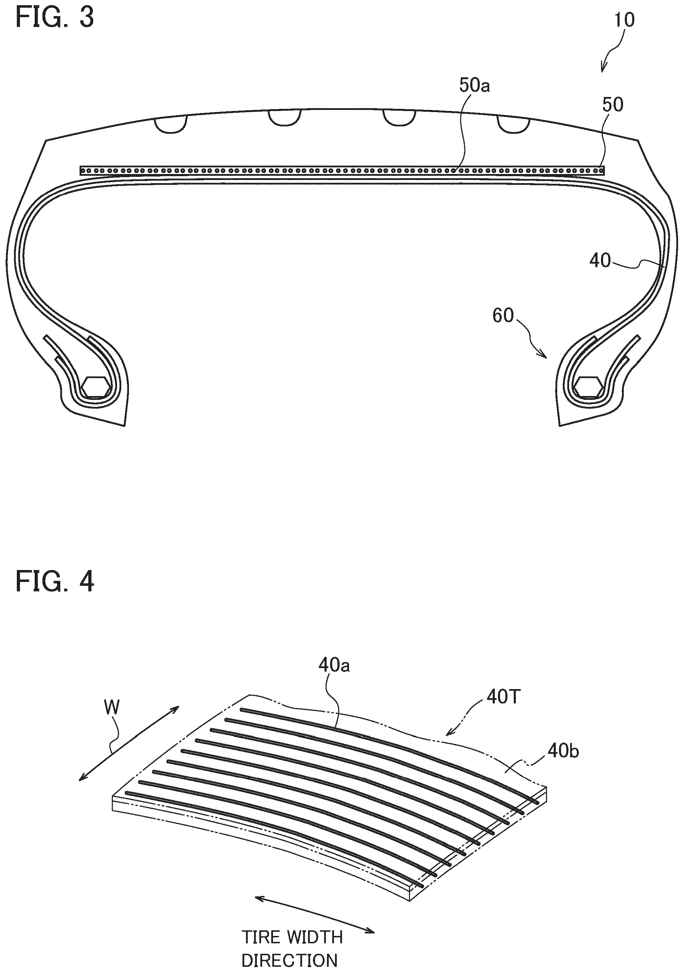

FIG. 2 is a cross-sectional view of the pneumatic tire 10 and the rim wheel 100. Specifically, FIG. 2 is a cross-sectional view along the tire width direction and the tire radial direction of a pneumatic tire 10 assembled to a rim wheel 100. In FIG. 2, the sectional hatching is not shown (the same as FIG. 3 and beyond).

The pneumatic tire 10 has a relatively small diameter while being wide. Specifically, the rim diameter RD of the rim wheel 100 is 12 inches or more and 17.5 inches or less.

As shown in FIG. 2, the rim diameter RD is the outer diameter of the rim body portion of the rim wheel 100 and does not include the portion of the rim flange 110.

The tire width SW of the pneumatic tire 10 is preferably 125 mm or more and 255 mm or less. As shown in FIG. 2, the tire width SW means a cross-sectional width of the pneumatic tire 10, and when the pneumatic tire 10 includes a rim guard (unillustrated), the rim guard portion is not included.

The aspect ratio of the pneumatic tire 10 is preferably 35% or more and 75% or less. The Aspect ratio is calculated using expression 1.

Aspect ratio (%) = tire section height H/tire width SW (second width) x 100          (Expression 1)

The tire outer diameter OD of the pneumatic tire 10 is 350 mm or more and 600 mm or less. The tire outer diameter OD is preferably 500 mm or less.

When the tire outer diameter OD is such a size and the rim width RW is defined by the rim width of the rim wheel 100 assembled to the pneumatic tire 10 is, the pneumatic tire 10 satisfies the relationship of (Expression 2) and (Expression 3).

$$0.78 \leq \text{RW/SW} \leq 0.99 \ldots \text{(Expression 2)}$$

$$0.56 \leq \text{RD/OD} \leq 0.75 \ldots \text{(Expression 3)}$$

The pneumatic tire 10 preferably satisfies $0.78 \leqq \text{RW/SW} \leqq 0.98$, and more preferably $0.78 \leqq \text{RW/SW} \leqq 0.95$. The pneumatic tire 10 preferably satisfies $0.56 \leq \text{RD/OD} \leq 0.72$, and more preferably $0.56 \leq \text{RD/OD} \leq 0.71$.

The pneumatic tire 10 satisfying such a relationship can ensure an air volume necessary for supporting the gross vehicle weight of the vehicle 1 while having a small diameter. Specifically, an air volume of 20,000 $cm^3$ or more is required in consideration of load bearing performance. In addition, in order to save space, it is required to be 80,000 $cm^3$ or less.

If the above relationship is satisfied, the rim width RW is not particularly limited, but is preferably as wide as possible from the viewpoint of securing the air volume. For example, the rim width may be 3.8 to 7.8 J.

Also, from the viewpoint of securing the air volume, it is preferable that the ratio of the rim diameter RD to the tire outer diameter OD is small, that is, the aspect ratio is high. However, as described above, it is preferable that the aspect ratio is low from the viewpoint of responsiveness, and it is preferable that the rim diameter RD is large in consideration of the housing space such as the in-wheel motor, so that the aspect ratio and the rim diameter RD have a trade-off relationship between the air volume and the responsiveness as well as the housing space such as the in-wheel motor.

One example of a suitable size for the pneumatic tire 10 is 205/40 R 15. The suitable rim width is approximately 7.5 J. Other examples of suitable sizes include 215/45 R 12. In this case, the suitable rim width is approximately 7.0 J.

In addition, although not particularly limited, a set internal pressure (normal pressure) of the pneumatic tire 10 is assumed to be 400 to 1,100 kPa, more realistically 500 ~ 900 kPa. The normal internal pressure is, for example, the air pressure corresponding to the maximum load capacity in the YearBook of JATMA (Japan Automobile Tire Manufacturers Association) in Japan, ETRTO in Europe, TRA in the United States, and other tire standards in each country.

In addition, the load to be borne by the pneumatic tire 10 is assumed to be 500 to 1,500 kgf, and practically, about 900 kgf.

FIG. 3 is a sectional view of the sole pneumatic tire 10. Specifically, FIG. 3 is a cross-sectional view of pneumatic tire 10 taken along the tire width direction and the tire radial direction.

As shown in FIG. 3, the pneumatic tire 10 includes a tread 20, a tire side portion 30, a carcass 40, a belt layer 50 and a bead portion 60.

The tread 20 is a portion in contact with the road surface. On the tread 20, a pattern (unillustrated) corresponding to the use environment of the pneumatic tire 10 and the type of vehicle to be mounted is formed.

The tire side portion 30 is continuous with the tread 20 and positioned inside the tire radial direction of the tread 20. The tire side portion 30 is an area from the tire width direction outer end of the tread 20 to the upper end of the bead portion 60. The tire side portion 30 is sometimes referred to as a sidewall.

The carcass 40 forms the skeleton of the pneumatic tire 10. The carcass 40 has a radial structure in which a carcass cord 40 a (not shown in FIG. 3, see FIG. 4) arranged radially along the tire radial direction is covered with a rubber material. However, the it is not limited to a radial structure, and may be a bias structure in which a carcass cords are arranged so as to cross each other in the tire radial direction.

The belt layer 50 is provided inside the tire radial direction of the tread 20. The belt layer 50 is provided outside the tire radial direction of the carcass 40. The belt layer 50 is formed by winding a resin-coated cord 50 a coated with a resin material along the tire circumferential direction.

That is, the belt layer 50 is a single-layer spiral belt formed by winding the resin-coated cord 50 a coated with a resin material along the tire circumferential direction. A specific configuration of the spiral belt is described in, for example, Japanese Unexamined Patent Publication No. 2018 -65426.

As the resin material, a rubber material constituting the tire side portion 30 and a resin material having a higher tensile elastic modulus than that of the rubber material constituting the tread 20 are used. As the resin material, a thermoplastic resin having elasticity, a thermoplastic elastomer (TPE), a thermosetting resin or the like can be used. It is desirable to use a thermoplastic elastomer in consideration of elasticity in running and moldability in manufacturing.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), etc.

Examples of the thermoplastic resin include polyurethane resin, polyolefin resin, vinyl chloride resin, polyamide resin, and the like. Further, as the thermoplastic resin material, for example, one having a deflection temperature under load (at 0.45 MPa Load) specified in ISO 75 -2 or ASTM D 648 of 78 ° C or more, a tensile yield strength specified in JIS K 7113 of 10 MPa or more, a tensile fracture elongation specified in JIS K 7113 of 50% or more, and a Vicat softening temperature (method A) specified in JIS K 7206 of 130 ° C or more can be used.

The cord itself of the resin-coated cord 50 a is preferably formed of any of aromatic polyamide fibers, carbon fibers or steel.

The bead portion 60 continues to tire side portion 30 and is positioned inside in tire radial direction of tire side portion 30. The bead portion 60 is an annular shape extending to the tire circumferential direction, and the carcass 40 is folded from the inside of the tire width direction to the outside of the tire width direction via the bead portion 60.

The bead portion 60 may be provided with a bead filler outside in the tire radial direction of a bead core, or may be provided with a chafer for preventing the carcass 40 or the like folded by the bead portion 60 from being rubbed and worn by the rim wheel 100.

(3) Configuration of the carcass 40

Next, the configuration of the carcass 40 will be described. FIG. 4 is a partial perspective view of a carcass treat 40 T constituting a carcass 40.

As shown in FIG. 4, the carcass treat 40 T is a member formed by covering the carcass cord 40 a arranged along the tire width direction with a covering rubber 40 b made of rubber material. The annular carcass 40 is formed by using a carcass treat 40 T.

The treat strength along the tire width direction of the carcass treat 40 T is 10 kN/25 mm or more (predetermined width W in the figure).

The carcass cord 40 a is preferably formed of any of aromatic polyamide fibers, carbon fibers or steel. As a specific example, aramid or carbon fiber can be used.

It should be noted that the number of driving lines (spacing between adjacent carcass cords 40 a) of the carcass cord 40 a may be adjusted depends on the required strength (material properties, cord structure, etc.) of the strength of the carcass treat 40 T.

(4)Function and effects

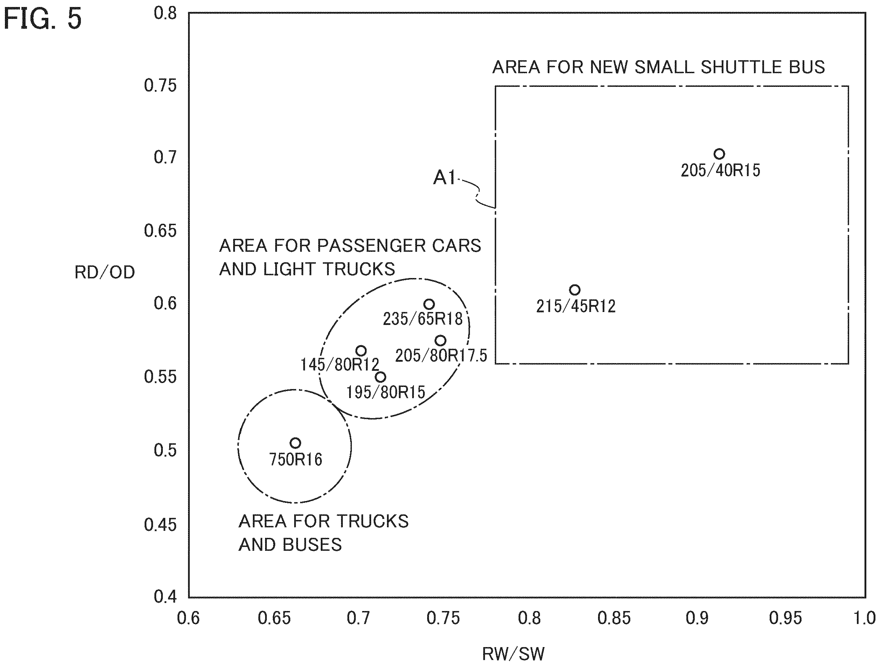

Next, the function and effects of the pneumatic tire 10 will be described. FIG. 5 shows a typical tire size positioning based on a combination of a tire shape (tire outer diameter OD and tire width SW) and a rim wheel shape (rim diameter RD and rim width RW).

Specifically, the horizontal axis of the graph shown in FIG. 5 shows the ratio (RW/SW) of the rim width RW to the tire width SW, and the vertical axis shows the ratio (RD/OD) of the rim diameter RD to the tire outer diameter OD. In FIG. 5, typical tire size positions are plotted according to the values of RW/SW and RD/OD.

As shown in FIG. 5, the area of the track bus tire is low in both RW/SW and RD/OD. The area of tire for passenger cars or light trucks is higher than that of tire for trucks and buses for both RW/SW and RD/OD.

An example of a suitable size for the pneumatic tire 10 described above, 215/45 R 12, is included in area A1. As described above, the area A1 corresponds to $0.78 \leqq RW/SW \leqq 0.99$, and $0.56 \leqq RD/OD \leqq 0.75$. Such an area A1 is positioned as an area of the tire for the new small shuttle bus with an emphasis on transportation of people, goods and the like in the city, as in the aforementioned vehicle 1.

The RD/OD in the area of the tire for the new small shuttle bus is not significantly different from, and some overlap with, the RD/OD in the area of the tire for the passenger cars or light trucks. On the other hand, the RW/SW in the area of the tire for the new small shuttle bus is higher than the RW/SW in the area of the tire for passenger cars or light trucks.

As described above, the outer diameter OD of the pneumatic tire 10 is 350 mm or more and 600 mm or less. Therefore, the diameter is sufficiently small in comparison with the size of the vehicle 1, and can contribute to space saving of the vehicle 1.

Further, according to the pneumatic tire 10 having the size included in the area A1, since the relationship of $0.78 \leqq RW/SW \leqq 0.99$ is satisfied, a wide rim width RW with respect to the tire width SW can be configured, that is, a wide tire can be configured, and it is easy to secure an air volume necessary for exhibiting high load capacity. If the rim width RW becomes too wide, the tire width SW also widens and space efficiency decreases, and the bead portion 60 tends to come off the rim wheel 100.

Further, according to the pneumatic tire 10 having the size included in the area A1, since the relationship of $0.56 \leqq RD/OD \leqq 0.75$ is satisfied, the rim diameter RD with respect to the tire outer diameter OD is large, and it is easy to secure a housing space for an in-wheel motor or the like. When the rim diameter RD becomes too small, the diameter size of the disc brake or the drum brake becomes small. Therefore, the contact area of the effective brake becomes small, and it becomes difficult to secure the required braking performance.

That is, according to the pneumatic tire 10, when it is mounted on the new small shuttle bus or the like, it is possible to achieve a high space efficiency while having a higher load-carrying capacity.

The rim diameter RD of the pneumatic tire 10 is 12 inches or more and 17.5 inches or less. Thus, a necessary and sufficient air volume and a housing space for an in-wheel motor can be secured while maintaining a small diameter. Also, braking performance and traction performance can be secured.

The tire width SW of the pneumatic tire 10 is preferably 125 mm or more and 255 mm or less. The aspect ratio of the pneumatic tire 10 is preferably 35% or more and 75% or less. Thus, a necessary and sufficient air volume and a housing space for an in-wheel motor can be secured.

Further, in this embodiment, as described above, the pneumatic tire 10 includes the belt layer 50 formed by winding a resin-coated cord 50 a along the tire circumferential direction. Such the belt layer 50 has a higher rigidity in the shoulder portion of the tread 20 than a general crossing belt layer, and can effectively suppress the diameter growth of the shoulder portion, which is a concern in a small-diameter tire such as the pneumatic tire 10. The belt layer 50 is also lightweight, contributing to a reduction in rolling resistance.

The treat strength of the carcass treat 40 T along the tire width direction is 10 kN/25 mm or more. Therefore, the pneumatic tire 10 can exhibit a load-carrying capacity. In a typical conventional pneumatic tire, the treat strength of the carcass treat along tire width direction is on the order of 2 - 5 kN/25 mm, and even when the carcass 40 is 2-ply, it is less than 10 kN/25 mm. In the pneumatic tire 10, the required load-carrying capacity can be secured without adding a member near the center part of the belt layer 50 where the securing of 2 plies of the carcass 40, the gauge increase of the pneumatic tire 10 and especially the required load-carrying capacity is difficult.

That is, according to the pneumatic tire 10, when the belt layer 50 formed by arranging the resin-coated cord 50 a along the tire circumferential direction is provided, both the durability and the high load-carrying capacity of the belt layer 50 can be accomplished.

In this embodiment, the carcass cord 40 a is formed from either aromatic polyamide fibers, carbon fibers or steel. Thus, the treat strength required for the carcass treat 40 T can be more surely and easily achieved.

(5) Other embodiments

Although the contents of the present invention have been described above with reference to the examples, it will be obvious to those skilled in the art that the present invention is not limited to these descriptions and that various modifications and improvements are possible within the scope of the appended claims.

For example, in the embodiment described above, the belt layer 50 is formed by winding a resin coated cord 50 a coated with a resin material along the tire circumferential direction, but the resin coated cord 50 a may not necessarily be wound along the tire circumferential direction a plurality of times. That is, the resin coating cord 50 a may be disposed along the tire circumferential direction.

In the above-described embodiment, the belt layer 50 is a single-layer spiral belt, but may not be necessarily a single-layer spiral belt.

[DELETED]

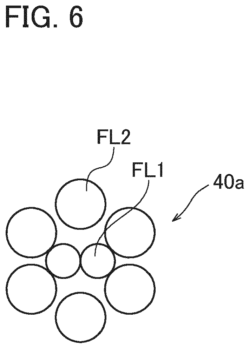

The carcass cord 40 a of the carcass 40 may be constructed as follows. FIG. 6 schematically shows a cross-sectional shape of the carcass cord 40 a. As shown in FIG. 6, the carcass cord 40 a is formed by twisting a plurality of filaments FL1 and a plurality of filaments FL2. Specifically, the carcass cord 40 a is formed by two filaments FL1 and six filaments FL2.

The carcass cord 40 a has an outer diameter smaller than that of a general carcass cord so as to easily follow the shape the bead portion 60 of the pneumatic tire 10 having a small diameter. Specifically, the outer diameter of the carcass cord 40 a is 0.7 mm or less. The outer diameter of the carcass cord 40 a is preferably 0.6 mm or less.

The outer diameters of the filaments FL1 and FL2 forming the carcass cord 40 a are preferably 0.2 mm or less.

In this modified example, the outer diameter of the filament FL1 is 0.15 mm and the outer diameter of the filament FL2 is 0.175 mm.

Further, in the embodiment described above, the pneumatic tire 10 is a small-diameter tire mounted on the vehicle 1 assuming a small shuttle bus, but the pneumatic tire 10 is not necessarily limited to such a small-diameter but limited in accordance with appended claim 1.

While embodiments of the invention have been described as above, it should not be understood that the statements and drawings which form part of this disclosure are intended to limit the invention. Various alternative embodiments, examples and operating techniques will become apparent to those skilled in the art from this disclosure, which are included in the invention as claimed.

[Reference Signs List]

1 Vehicles
10 Pneumatic tire
20 Tread
30 Tire side portion
40 Carcass
40 a Carcass cord
40 b Coated rubber
40 T Carcass treat
50 Belt layer
50 a Resin coated cord
60 Bead portion
100 Rim wheels
110 Rim flange

**Claims**

1.  A tire (10) comprising:

    an annular carcass (40) formed by using a carcass treat (40T) in which a carcass cord (40a) disposed along the tire width direction is coated with a rubber material; and
    a belt layer (50) provided outside in a tire radial direction of the carcass (40) and formed by disposing a resin-coated cord (50a) coated with a resin material along a tire circumferential direction, wherein
    a treat strength along a tire width direction of the carcass treat (40T) is 10 kN/25 mm or more, wherein
    OD is defined by an outer diameter of the tire (10),
    RW is defined by a rim width of a rim wheel (100) assembled to the tire (10),
    SW is defined by a tire width of the tire (10), and
    RD is defined by a rim diameter of the tire (10), wherein
    the OD is 350 mm or more and 600 mm or less,
    the relation of $0.78 \leq RW/SW \leq 0.99$, and
    the relation of $0.56 \leq RD/OD \leq 0.75$ is satisfied, wherein
    the RD of the tire (10) is 12 inches (305 mm) or more and 17.5 inches (445 mm) or less.

2.  The tire according to claim 1, wherein the carcass cord is formed from any of aromatic polyamide fibers, carbon fibers, or steel.

**Patentansprüche**

1.  Reifen (10), der Folgendes umfasst:

    eine ringförmige Karkasse (40), gebildet durch Verwenden von einem bearbeiteten Karkassenelement (40T), in der ein Karkassenkord (40a), der entlang der Reifenbreitenrichtung angeordnet ist, mit einem Gummimaterial überzogen ist; und
    eine Gürtellage (50), die in einer Reifenradialrichtung außerhalb der Karkasse (40) bereitgestellt ist und durch Anordnen eines harzüberzogenen Kords (50a), der mit einem Harzmaterial überzogen ist, entlang einer Reifenumfangsrichtung gebildet wird, wobei
    eine Festigkeit eines bearbeiteten Elements entlang einer Reifenbreitenrichtung des bearbeiteten Karkassenelements (40T) 10 kN/25 mm oder mehr beträgt, wobei
    OD durch einen Außendurchmesser des Reifens (10) definiert wird,
    RW durch eine Felgenbreite eines Felgenrades (100) definiert wird, das an dem Reifen (10) montiert ist,
    SW durch eine Reifenbreite des Reifens (10) definiert wird, und
    RD durch einen Felgendurchmesser des Reifens (10) definiert wird, wobei der OD 350 mm oder mehr und 600 mm oder weniger beträgt,

das Verhältnis von 0,78 ≤ RW/SW ≤ 0,99, und

das Verhältnis von 0,56 ≤ RD/OD ≤ 0,75 erfüllt ist, wobei

der RD des Reifens (10) 12 Zoll (305 mm) oder mehr und 17,5 Zoll (445 mm) oder weniger beträgt.

**2.** Reifen nach Anspruch 1, wobei der Karkassenkord aus einem beliebigen von aromatischen Polyamidfasern, Kohlenstoff-Fasern oder Stahl gebildet ist.

**Revendications**

**1.** Pneumatique (10), comprenant :

une carcasse annulaire (40) formée en utilisant un élément traité de la carcasse (40T), dans lequel un câblé de carcasse (40a) disposé le long de la direction de la largeur du pneumatique est revêtu d'un matériau de caoutchouc ; et

une nappe ceinture (50) fournie vers l'extérieur, dans une direction radiale du pneumatique, de la carcasse (40) et formée en disposant un câblé recouvert de résine (50a), revêtu d'un matériau de résine le long d'une direction circonférentielle du pneumatique ; dans lequel

une résistance d'un élément traité le long d'une direction de la largeur du pneumatique de l'élément traité de la carcasse (40T) correspond à 10 kN/25 mm ou plus, dans lequel

OD est défini par un diamètre extérieur du pneumatique (10),

RW est définie par une largeur de jante d'une roue à jante (100) montée sur le pneumatique (10),

SW est définie par une largeur de pneumatique du pneumatique (10), et

RD est défini par un diamètre de la jante du pneumatique (10), dans lequel

le OD correspond à 350 mm ou plus et à 600 mm ou moins ;

la relation de 0,78 ≤ RW/SW ≤ 0,99, et

la relation de 0,56 ≤ RD/OD ≤ 0,75 est satisfaite, dans lequel

le RD du pneumatique (10) correspond à 12 pouces (305 mm) ou plus et à 17,5 pouces (445 mm) ou moins.

**2.** Pneumatique selon la revendication 1, dans lequel le câblé de carcasse est formé à partir d'un parmi des fibres de polyamide aromatique, des fibres de carbone ou d'acier.

FIG. 1

FIG. 2

SW

10

H

110

RW

OD

RD

100

TIRE RADIAL
DIRECTION

TIRE WIDTH
DIRECTION

## FIG. 3

## FIG. 4

TIRE WIDTH
DIRECTION

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018257435 A1
- WO 2016017556 A1
- EP 2123480 A2
- JP 2018065426 A